Europäisches Patentamt

European Patent Office

Office européen des brevets

(11) Publication number: **0 136 778**
**B1**

## EUROPEAN PATENT SPECIFICATION

(45) Date of publication of patent specification: **30.11.88**

(51) Int. Cl.⁴: **G 01 B 7/00**

(21) Application number: **84304985.9**

(22) Date of filing: **23.07.84**

(54) Position sensing apparatus.

<table>
<tr><td>

(30) Priority: **22.07.83 GB 8319812**

(43) Date of publication of application:
**10.04.85 Bulletin 85/15**

(45) Publication of the grant of the patent:
**30.11.88 Bulletin 88/48**

(84) Designated Contracting States:
**CH DE FR GB IT LI SE**

(56) References cited:
**EP-A-0 006 022**
**FR-A-2 408 813**
**US-A-4 118 871**
**US-A-4 130 941**
**US-A-4 145 816**

**PATENT ABSTRACTS OF JAPAN vol. 7, no. 192, 23rd August 1983, page (P-218) (1337); & JP-A-58-92804**

**PATENT ABSTRACTS OF JAPAN vol. 1, no. 15, 23rd March 1977, page 1218 M76; & JP-A-51-128782**

</td><td>

(73) Proprietor: **Renishaw plc**
**Gloucester Street**
**Wotton-Under-Edge Gloucestershire GL12 7DN**
**(GB)**

(72) Inventor: **Collingwood, David**
**12, Guildings Way**
**Kings Stanley Stonehouse Glos GL10 3LF (GB)**

(74) Representative: **Jackson, John Timothy et al**
**Patent Department Renishaw plc Gloucester Street**
**Wotton-under-Edge Gloucestershire GL12 7DN**
**(GB)**

</td></tr>
</table>

Courier Press, Leamington Spa, England.

## Description

It is known to sense the position of an object by providing a sensor supported on a support and moving the support relative to the object to bring the sensor into sensing relationship with the object, the sensor having an output responsive to attainment of the sensing relationship. It is known (e.g. from JP—A—58—92804) for the sensor to incorporate an acoustic transducer, which produces an electrical signal in response to sound waves produced when the sensor hits the object. It is also known (e.g. from US—A—4153998) for the sensor to incorporate a non-acoustic transducer for sensing the object.

The output of the sensor has to be transmitted to a control system via the support. This can be done by suitable wiring. However, in cases where it is required to provide for automatic attachment of the sensor to the support and removal of the sensor therefrom it is desirable to provide for the wireless transmission of the sensor output. It has already been proposed (e.g. in JP—A—51—128782) to transmit said output optically between a transmitter on the sensor and a receiver on the support but this requires a relatively precise position of the receiver relative to the transmitter. US—A—4118871 suggests transmitting the output by radio, but this is complex and expensive.

In the above-mentioned JP—A—58—92804, the output is converted back to an acoustical form by a sound transmitter located on the main body of the sensor, and transmitted through the support to a sound receiver. However, this necessitates mounting the object-contacting parts of the sensor via a sound insulating material, in order to isolate the acoustic transducer from the sound transmitter. This sound insulating mounting is disadvantageous.

According to the invention there is provided a position sensing apparatus comprising a sensor releasably connected to a support, the support being movable relative to an object to be sensed, the sensor comprising a sound transmitter adapted to generate a sensor signal responsive to the sensor coming into sensing relationship with the object, the transmitter being in sound-transmitting engagement with the support, and a receiver connected in sound-transmitting engagement with the support in a position remote from the transmitter for reception of said signal, characterised in that the sound transmitter is arranged to generate an ultrasonic sensor signal in response to operation of an electrical contact on the sensor for detecting said sensing relationship.

Because the sensing relationship is detected by operation of an electrical contact on the sensor, there is no need for sound insulation between it and the ultrasonic transmitter.

An example of apparatus according to this invention will now be described with reference to the accompanying drawing wherein:—

Fig. 1 is a sectional elevation of a part of a machine tool.

Fig. 2 is a block diagram of a transmitter-receiver system.

Fig. 3 is a diagram of signals processed by the system.

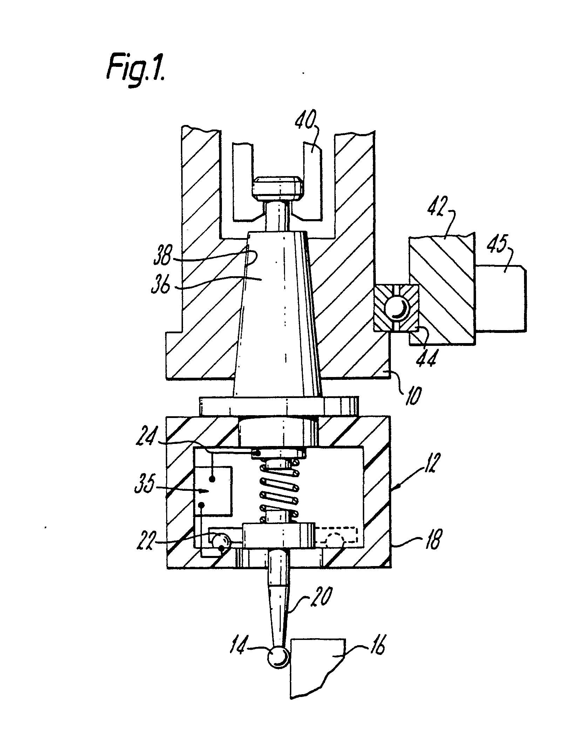

Referring to Fig. 1, there is shown one end of a machine tool spindle 10 which normally supports a cutting tool, e.g. a milling cutter, but into which has been inserted, in the place of the tool, a sensor 12 whereby to sense a surface 14 of a workpiece 16 when the spindle is moved to bring the sensor into sensing relationship with the surface 14. The purpose of the arrangement is to measure the position of the surface 14. In this example the sensor 12 comprises a stylus 20 supported on electrical contacts 22 arranged in a housing 18 from which the stylus extends. The sensor is said to be in sensing relationship with the surface 14 when the stylus engages the latter surface and by such engagement becomes displaced from at least one of the contacts 22 to the extent of breaking an electric circuit 24 and commence generation of a signal sequence generally referred to as the sensor signal.

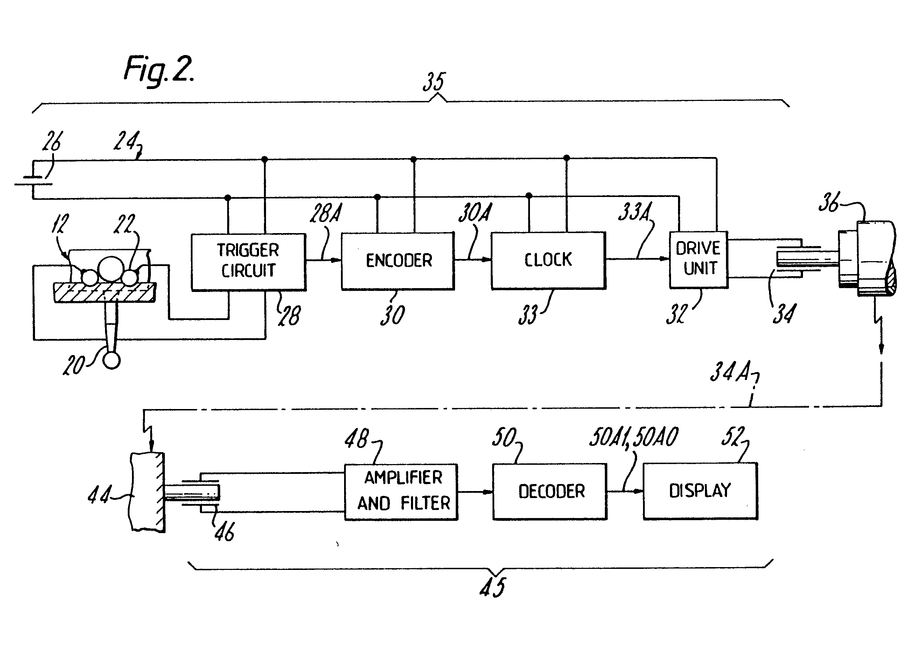

Referring now also to Fig. 2, the circuit 24 includes a power supply being a battery 26 arranged so that when a said contact 22 is broken a Schmitt trigger circuit 28 outputs a primary signal, being a monostable signal 28A, to an encoder 30 adapted to produce a secondary or code signal 30A to a transducer drive unit 32 adapted to drive an ultrasonic transducer 34 which produces a corresponding transmission signal 34A of ultrasound. The elements of the circuit 24 constitute a transmitter 35. The transducer 34 is earthed into sound-transmitting relationship with the housing 18. Preferably, as shown, the transducer 34 is earthed to one end of a conical steel spigot 36 to which the housing 18 is secured and which forms part of the sensor. The spigot 36 is drawn into firm but releasable engagement with a conical socket 38 provided in the adjacent end of the spindle 10, the engagement being effected by a draw mechanism 40 in a manner known for releasably connecting a cutting tool to the spindle. Both the spigot and the spindle are made of steel and the firm engagement between them ensures transmission of at least a significant part of the energy of the signal 34A from the sensor 12 to the spindle 10. The spindle is supported for rotation in a bearing housing 42 by means of a rolling element bearing 44. The signal 34A passes across the bearing 44 and through the housing 42 to a receiver 45 comprising a transducer 46, amplifier and filter unit 48, decoder 50 and display or output device 52.

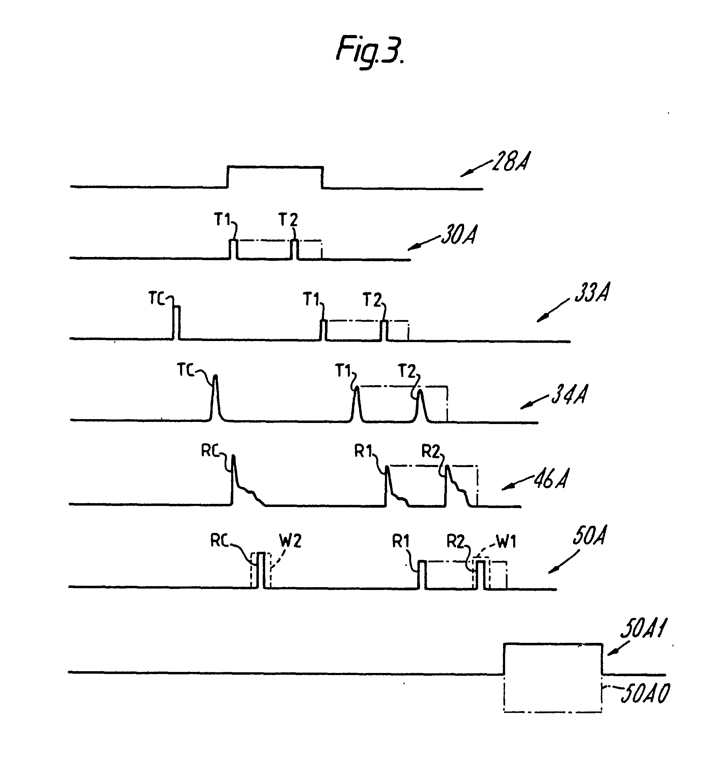

Referring to Fig. 3, the secondary or code signal 30A is intended to ensure discrimination between the sensor signal 12A and any echos or other noise from the spindle 10 or any other part of the machine. Essentially the code comprises a transmitted pulse T1 responsive to the rising edge of the signal 28A and at least one transmitted confirmation pulse T2 occurring at a given point of time in the duration of the signal 28A. The decoder 50 is designed to respond to the transmitted start pulse T1 by generating a received start pulse R1 and, responsive to the latter pulse, a confirmation pulse window W1 whose position relative to the pulse R1 corresponds to the position of the pulse T2 relative to the pulse T1. If the transmission is true then there occurs a received confirmation pulse R2 coincident with the window W1. The decoder is designed to respond to this coincidence by outputting a monostable signal 50A1 to the display unit 52. If the transmission is "false", i.e. if the decoder does not receive a confirmation pulse R2, or some interference pulse occurs in the interval between the received start pulse R1 and the wndow W1, then the decoder outputs an error signal 50AO to the display unit.

The transmitter 35 also includes a clock 33 adapted to output a clock signal 33A to the drive unit 32 for transmission to the receiver 45. The signal 33A is a regular pulse signal intended to indicate to the display that the stylus 20 is seated on the contacts 22 and that the transmitter-receiver link is operational. The encoder 30 is arranged to stop the clock for a period slightly in excess of the code signal 30A whereafter the clock resumes its operation. Responsive to receipt of any said clock signal, the decoder generates a window W2 intended to be coincident with the next clock signal. Responsive to the absence of a said clock signal at any given window W2, the decoder outputs an error signal the same as the signal 50AO.

The battery 26 may be provided with a battery condition sensor (not shown and known *per se*) having an output identifying a given level of charge of the battery. The latter output is connected to the encoder to include in the signal 33A a discrete pulse identifying said level for transmission to the display unit.

## Claims

1. Position sensing apparatus comprising a sensor (12) releasably connected to a support (10, 42), the support (10, 42) being movable relative to an object (16) to be sensed, the sensor (12) comprising a sound transmitter (35) adapted to generate a sensor signal (34A) responsive to the sensor (12) coming into sensing relationship with the object (16), the transmitter (35) being in sound-transmitting engagement with the support (10, 42), a receiver (45) connected in sound-transmitting engagement with the support (10, 42) in a position remote from the transmitter (35) for reception of said sensor signal (34A), characterised in that the sound-transmitter (35) is arranged to generate an ultrasonic sensor signal (34A), in response to operation of an electrical contact (22) on the sensor for detecting said sensing relationship.

2. Apparatus according to claim 1, the sensor (12) comprising a housing (18), stylus (20) projecting from the housing (18) and adapted for engagement with the object (16) for the sensing thereof, said transmitter (35) being arranged to produce said signal (34A) responsive to said engagement.

3. Apparatus according to claim 1, the sensor (12) being releasably connected to the support (10, 42) in sound-transmitting relationship therewith.

4. Apparatus according to claim 3, the sensor (12) including an electrical power supply (26) for powering the transmitter (35).

5. Apparatus according to claim 3, the sensor (12) including a conical spigot (36) releasably engaged with a conical socket (38) in the support (10, 42) to establish firm mechanical and sound-transmitting engagement therebetween.

6. Apparatus according to claim 1, the transmitter (35) comprising an electric circuit (24) including a power supply (26), means responsive to the sensor (12) coming into said sensing relationship for changing the state of the circuit and thereby define in the circuit a primary sensor signal (28A), means (30) for encoding the primary signal (28A) thereby to define a secondary signal (30A), an ultrasonic transducer (34) for transmitting the secondary signal (30A) as a transmission signal (34A) of ultrasound to the support.

7. Apparatus according to claim 6 wherein the receiver (45) comprises an ultrasonic transducer (46) for converting said transmission signal (34A) into an electrical signal (46A) corresponding to said secondary signal (30A) and means (50) for decoding the latter signal (46A).

8. Apparatus according to claim 7, said power supply comprising a battery (26), and wherein there is a means for determining the state of charge of the battery connected to said encoder (30), and said encoder (30) being responsive to said state of charge to produce a discrete code identifying said state of charge for transmission to the receiver (45).

9. Apparatus according to claim 1 wherein the support (10, 42) comprises a spindle (10) supported for rotation in a housing (42) by a bearing (44), said receiver (45) being mounted on the housing (42), and said sensor signal (34A) being transmittable through said bearing (44).

## Patentansprüche

1. Lagefühlervorrichtung mit einem lösbar mit einer Stütze (10, 42) verbundenen Fühler (12), wobei die Stütze (10, 42) gegenüber einem zu erfassenden Objekt (16) bewegbar ist, der Sensor (12) einen Schallsender (35) umfaßt, der zur Erzeugung eines Fühlersignals (34A) ausgelegt ist in Abhängigkeit davon, daß der Fühler (12) in Erfassungsbeziehung mit dem Objekt (16) kommt, der Sender (35) in Teilübertragungsanlage an der Stütze (10, 42) ist, ein Empfänger (45) in Schall-übertragungseingriff mit der Stütze (10, 42) in einer vom Sender (35) entfernten Lage ist zum Empfang des Fühlersignals (34A), dadurch gekennzeichnet, daß der Schallsender (35) zum Erzeugen eines Ultraschall-Fühlersignales (34A) ausgelegt ist in Abhängigkeit von der Betätigung eines elektrischen Kontaktes (22) an dem Fühler zur Erkennung der Erfassungs-Beziehung.

2. Vorrichtung nach Anspruch 1, bei der der Fühler (12) ein Gehäuse (18), einen von dem Gehäuse abstehenden Fühlerstift (20), zur Anlage an dem Objekt (16) zu dessen Erfassung ausgelegt, umfaßt und der Sender (35) zur Erzeugung des Signales (34A) in Abhängigkeit von der Anlage ausgelegt ist.

3. Vorrichtung nach Anspruch 1, wobei der Fühler (12) lösbar mit der Stütze (10, 42) in Schallübertragungsbeziehung mit dieser verbunden ist.

4. Vorrichtung nach Anspruch 3, wobei der Fühler eine elektrische Leistungsquelle (26) zur Leistungsversorgung des Senders (35) enthält.

5. Vorrichtung nach Anspruch 3, wobei der Fühler einen konischen Zapfen (36) in lösbarem Eingriff mit einer konischen Fassung (38) in der Stütze (10, 42) enthält, um einen festen mechanischen und schallübertragenden Eingriff damit zu errichten.

6. Vorrichtung nach Anspruch 1, bei der der Fühler (35) eine elektrische Schaltung (24) mit umfaßt, welche enthält eine Leistungsquelle (26), Mittel, die in Abhängigkeit davon, daß der Fühler (12) in die Erfassungsbeziehung kommt, den Zustand der Schaltung ändern und dadurch in der Schaltung ein Primär-Fühlersignal (28A) definieren, Mittel (30) zum Kodieren des Primärsignales (28A), um dadurch ein Sekundärsignal (30A) zu definieren, einen Ultraschallwandler (34) zum Aussenden des Sekundärsignals (30A) als ein Ultraschall-Sendesignal (34A) zu der Stütze.

7. Vorrichtung nach Anspruch 6, bei der der Empfänger (45) einen Ultraschallwandler (46) zum Wandeln des Sendesignals (34A) in ein dem Sekundärsignal (30A) entsprechendes elektrisches Signal (46A) zu wandeln und Mittel (50) zum Dekodieren des letzteren Signals (46A) enthält.

8. Vorrichtung nach Anspruch 7, bei der die Leistungsquelle eine Batterie (26) umfaßt, und bei der ein Mittel zum Bestimmen des Ladungszustandes der Batterie vorhanden ist, das an dem Kodierer (30) angeschlossen ist, wobei der Kodierer (30) in Abhängigkeit von dem Ladungszustand einen diskreten Kode erzeugt, welcher den Ladungszustand zur Aussendung zu dem Empfänger identifiziert.

9. Vorrichtung nach Anspruch 1, bei der die Stütze (10, 42) eine drehbar in einem Gehäuse (42) durch ein Lager (44) abgestützte Spindel (10) umfaßt, der Emfänger (45) an dem Gehäuse (42) angebracht ist und das Fühlersignal (34A) durch das Lager (44) aussendbar ist.

**Revendications**

1. Appareil de détection de position comprenant un détecteur (12) relié de manière détachable à un support (10, 42), le support (10, 42) étant mobile par rapport à un objet (16) à détecter, le détecteur (12) comprenant un transmetteur acoustique (35) conçu pour produire un signal de détecteur (34A) répondant à l'entrée en relation de détection du détecteur (12) avec l'objet (16), le transmetteur (35) étant en engagement de transmission acoustique avec le support (10, 42), un récepteur (45) relié en engagement de transmission acoustique avec le support (10, 42) à une position éloignée du transmetteur (35) afin de recevoir ledit signal de capteur (34a), caractérisé en ce que le transmetteur acoustique (35) est disposé de manière à produire un signal de détecteur ultrasonore (34A), en réponse au fonctionnement d'un contact électrique (22) prévu sur le capteur pour détecter ladite relation de détection.

2. Appareil selon la revendication 1, le détecteur (12) comprenant un boîtier (18), une pointe (20) partant en saillie du boîtier (18) et conçue pour s'engager avec l'objet (16) en vue de la détection de ce dernier, ledit transmetteur (35) étant disposé de manière à produire ledit signal (34A) répondant audit engagement.

3. Appareil selon la revendication 1, le détecteur (12) étant relié de manière détachable au support (10, 42) en relation de transmission acoustique avec ce dernier.

4. Appareil selon la revendication 3, le détecteur (12) comprenant une alimentation électrique (26) pour alimenter le transmetteur (35).

5. Appareil selon la revendication 3, le détecteur (12) comprenant un embout mâle conique (36) emboîte de manière détachable dans un embout femelle conique (38) prévu dans le support (10, 42), afin d'établir un engagement solide, mécanique et de transmission acoustique, entre ces deux pièces.

6. Appareil selon la revendication 1, le transmetteur (35) comprenant un circuit électrique (24) comprenant une alimentation électrique (26), des moyens réagissant à l'entrée du capteur (12) dans ladite relation de détection pour modifier l'état du circuit et définir ainsi dans le circuit un signal de détecteur primaire (28A), des moyens (30) pour coder le signal primaire (28A) et définir ainsi un signal secondaire (30A), et un transducteur ultrasonore (34) pour transmettre le signal secondaire (30A) au support sous la forme d'un signal de transmission ultrasonore (34A).

7. Appareil selon la revendication 6, dans lequelle récepteur (45) comprend un transducteur ultrasonore (46) pour transformer ledit signal de transmission (34A) en un signal électrique (46A) correspondant audit signal secondaire (30A), et des moyens (50) pour décoder ledit signal électrique (46A).

8. Appareil selon la revendication 7, ladite alimentation électrique comprenant une batterie (26), et dans lequel il est prévu un moyen pour déterminer l'état de charge de la batterie reliée audit codeur (30), et ledit codeur (30) réagissant audit état de charge pour produire un code discret identifiant ledit état de charge en vue de la transmission au récepteur (45).

9. Appareil selon la revendication 1, dans lequel le support (10, 42) comprend une broche (10) supportée en rotation dans un logement (42) par un palier (44), ledit récepteur (45) étant monté sur le logement (42), et ledit signal de détecteur (34A) pouvant être transmis par l'intermédiaire dudit palier (44).

# Fig.1.

Fig.2.

TRIGGER CIRCUIT

ENCODER

CLOCK

DRIVE UNIT

AMPLIFIER AND FILTER

DECODER

DISPLAY

EP 0 136 778 B1

## Fig.3.